# EUROPEAN PATENT APPLICATION

(11) **EP 4 749 097 A1**
(43) Date of publication of application: **27.05.2026**
(21) Application number: 24383267.2
(22) Date of filing: 22.11.2024
(51) Int. Cl.: F01D 21/00, F01D 21/12, F01D 21/14

(54) **METHOD AND COMPUTER PROGRAM FOR DETECTING SURGE EVENTS IN A TURBINE ENGINE**

(71) Applicant: Airbus Operations, S.L.U., 28906 Getafe (Madrid) (ES)
(72) Inventor: MARTINEZ SANCHO, Alberto, 28906 Getafe, Madrid (ES); RAMOS PAUL DE LA LASTRA, Pedro Felipe, 28906 Getafe, Madrid (ES)

(57) **Abstract**

The invention relates to a method for detecting surge events in a turbine engine. More particularly the invention relates to a method for detecting surge events before impediment of the operation of a turbine engine, based on the exhaust gas temperature and its variation in time, as well as based on the engine speed rotation, so as to trigger an alert signal in case certain conditions are met, such that surge of the engine may be anticipated, detected and in some cases avoided.

## Description

The invention relates to a method and a computer implemented method as well a computer program to implement such method adapted to detect surge situations in a turbine engine. In particular the method relates to detecting a surge event in a turbine engine core compressor which feeds the turbine engine with compressed air.

Surge events in a turbine engine correspond to a situation in which the flow of gas normally happening in the engine from an intake to an exhaust is disturbed. More particularly in the event of a surge, there may be no flow of gas or even a reversed flow of gas in the compressor. Such events may result in damages for the engine, which reduce its availability and increase maintenance duration and costs. Moreover, the engine controller may suddenly shut the engine down, impacting its availability for the aircraft.

Such situation may appear when the engine has been intaking sand or dust and is, as a consequence, clogged. The combustor may be clogged and combustion in the combustion chamber is then degraded. This may lead to surge events in the core compressor of the engine.

An early detection of surge events is beneficial as it may allow to switch off the engine before it is deteriorated and/or plan a light maintenance operation to restore its full functionality. The availability of the whole aircraft may thus be improved as it would be minimally impacted by surge events in the engine. Also, an early detection or anticipation of a surge event increases safety of the aircraft because the engine will undergo a maintenance operation instead of being confronted with an unexpected automatic shutdown of the engine at a later stage.

The method may particularly be applied to auxiliary power units (APU) in aircrafts.

Some methods to detect surge in a load compressor already exist and are implemented by the controller of the APU. Such method however, usually detect the surge at a later stage when its effects are stronger on the engine and result in the controller shutting the engine down.

The invention aims to propose a new method which allows to detect surges in the core compressor of the engine.

The invention aims to aims to propose a method which allows to detect surges of low severity in the engine, such that the engine integrity may be preserved.

The invention aims to propose a method which increases the availability of the engine and as a consequence of the aircraft, and reduces its maintenance cost.

The invention also aims to propose a method which increases safety of the aircraft as the occurrence or possibility of occurrence of a surge event may be signaled early to the maintenance team such that automatic shutdown of the engine in consecutive flights may be avoided.

The invention proposes a method for identifying surge events in a turbine engine comprising:
a. obtaining temperature values of exhaust gases of the engine at multiple instants during the operation of the engine,
b. obtaining values of a temperature variation indicator based on the exhaust gases' temperature values,
c. if, at a given instant, a first criteria and a second criteria are met, the first criteria consisting of at least one temperature value being above a predetermined exhaust temperature threshold, and a second criteria consisting of at least one value of the temperature variation indicator being above a first predetermined temperature variation threshold, then:
   i. defining a monitoring interval extending:
      - from the first instant of the first criteria and the second criteria being met,
      - for as long as the first criteria and the second criteria are consecutively met,
   ii. obtaining a set of values of a rotation speed of a shaft of the engine during the monitoring interval, determining the minimum value in this set of values, and comparing this minimum speed value to a first predetermined speed threshold,
   iii. obtaining a set of values of the temperature of exhaust gases during the monitoring interval, calculating a temperature gap between the highest temperature value in this set of values and the lowest temperature value in this set of values, and comparing this temperature gap with a first predetermined temperature gap threshold,
d. if, in at least two separate monitoring intervals, the minimum speed value is below said first predetermined speed threshold and the temperature gap is above said predetermined temperature gap threshold, triggering an alert signal.

The method applies to detecting surges in a core compressor of the turbine engine. The core compressor is the compressor that directly feeds the engine with compressed air. The core compressor has a different function from a load compressor. A load compressor is a compressor that uses the mechanical energy of the engine to produce pneumatic energy dedicated to other systems than the engine itself such as, for example in an aircraft, compressed air for cabin pressurization.

Beneficially the temperature of the exhaust gases of the engine are measured during the whole operation phase of the engine.

The minimal duration of the monitoring interval may be the duration between two consecutive temperature measurements. This would be the case when the first criteria and the second criteria are only met at a single instant. The temperature variation indicator may be a derivation calculation based on the difference between two consecutive values of temperature divided by the time elapsed between the two measurements.

The alert signal may be a signal to a computer, for example an engine controller, or to an auto-pilot computer for example. The alert signal may also be a message to a human, such as a written message or a pilot light to a pilot, to a maintenance team or to a maintenance software for example.

The alert signal may be used by a controller of the engine to trigger technical effects in the operation of the engine such as modifying its operation conditions.

Obtaining values may represent steps of measuring and or storing data representative of these values. This is particularly the case if the invention is implemented while the engine is operating.

Obtaining values may also represent steps of retrieving data representative of these values from a memory. This may particularly the case if the invention is implemented after an operating phase of the engine. For example, in the case of an aircraft this may be the case if the data is analyzed after the aircraft has landed following a flight.

Sub-steps i), ii) and iii) of step c) are only triggered if the first criteria and the second criteria are met at a same instant. Similarly, the monitoring interval as defined in sub-step i) extends for as many consecutive datapoints at which the first criteria and the second criteria are simultaneously met.

In some embodiments of the invention, an alert signal is triggered only if the minimum speed value is below said first predetermined speed threshold and the temperature gap is above said predetermined temperature gap threshold, in two consecutive extended intervals. The detection of the two conditions in isolated extended intervals may be false positives in some conditions and be, in other conditions, the sign of premises of a surge or of a surge in the engine; but the detection of the two conditions in two consecutive extended intervals represent the premises of a surge or a surge in the engine. Thereby, in some embodiments of the invention, it may be elected to ignore the detection of the two conditions happening in two separate non-consecutive intervals, in particular when the two events happen in intervals that are very separated from each other in time. In these embodiments, an alert signal is triggered when the two conditions happen in two consecutive extended intervals.

In some embodiments of the invention, alert signals are triggered as long as the conditions are met in two consecutive monitoring intervals. As a consequence, in such embodiments, if the conditions are met in three consecutive separate monitoring intervals, two consecutive alert signals will be triggered.

In some embodiments of the invention, step c) is implemented only if the temperature variation indicator is also below a second predetermined temperature variation threshold.

Therefore, the implementation of sub-steps i), ii), and iii) of step c are conditioned to a third criteria, additionally to the first criteria and the second criteria. This third criteria may allow to filter out erroneous values of the temperature variation indicator.

In such embodiments, the analysis of the speed rotation of the engine's shaft and of the temperature gap during a monitoring interval is thus only implemented if, during said monitoring interval:
- at least one temperature value is above a predetermined exhaust temperature threshold, and
- at least one value of the temperature variation indicator is above the first predetermined temperature variation threshold and below the second predetermined temperature variation threshold.

In some embodiments of the invention, in step c), the monitoring interval is extended to also comprise a time interval situated right before the first instant of this monitoring interval at which the first criteria and the second criteria are met.

Such monitoring interval to which time has been added either before the first occurrence of the first criteria and the second criteria, and/or after the last consecutive occurrence of the first criteria and the second criteria is called extended interval.

A method of the invention thereby comprises a step of defining an extended time interval, called extended interval, comprising the original monitoring interval during which the first criteria and the second criteria are continuously met, said extended interval having a longer duration than the duration of said monitoring interval.

By right before it is meant before and continuous with, such that the extended interval is one uninterrupted time interval which comprises moments before the monitoring interval as well as the monitoring interval.

Indeed, in a method of the invention, only the exhaust temperature and temperature variation are monitored actively during the whole operation of the engine. However, upon detection of abnormal values for these variables in a short duration, these and other variables are further investigated in moments happening before and/or after this first indication of a possible surge in order to confirm if a surge is indeed happening or not.

In some embodiments of the invention, in step c), the monitoring interval is extended to also comprise a time interval situated right after the last consecutive occurrence of the first criteria and the second criteria being met in this monitoring interval.

By right after it is meant after and continuous with, such that the extended interval is one uninterrupted time interval which comprises moments after the monitoring interval as well as the monitoring interval.

In other embodiments, the extended interval may comprise time intervals situated both right before and right after the monitoring interval, such that the extended interval represents an extension of the monitoring interval before and after the original monitoring interval.

The monitoring interval may be extended by between 2 and 30 seconds, for example by 10 seconds.

The extended interval may for example comprise 5 seconds before the monitoring interval and 5 seconds after before the monitoring interval.

In some embodiments of the invention, in step d), the alert signal is triggered only if the minimum speed value is also above a second predetermined speed threshold.

Thus, to trigger an alarm signal in step d), the conditions to be met are:
- the minimum speed value is below the first predetermined speed threshold and above the second predetermined speed threshold, and
- the temperature gap is above the predetermined temperature gap threshold.

This third condition may allow to filter out erroneous values of the minimum engine speed.

A method according to the invention may be implemented as computer-implemented method. In particular the method may be implemented by a computer, a controller, or any equivalent device.

In particular the invention extends to a computer-implemented method for identifying surge events in a turbine engine comprising:
a. obtaining temperature values of exhaust gases of the engine at multiple instants during the operation of the engine,
b. obtaining values of a temperature variation indicator based on the exhaust gases' temperature values,
c. if, at a given instant, a first criteria and a second criteria are met, the first criteria consisting of at least one temperature value being above a predetermined exhaust temperature threshold, and a second criteria consisting of at least one value of the temperature variation indicator being above a first predetermined temperature variation threshold, then:
   i. defining a monitoring interval extending:
      - from the first instant of the first criteria and the second criteria being met,
      - for as long as the first criteria and the second criteria are consecutively met,
   ii. obtaining a set of values of a rotation speed of a shaft of the engine during the monitoring interval, determining the minimum value in this set of values, and comparing this minimum speed value to a first predetermined speed threshold,
   iii. obtaining a set of values of the temperature of exhaust gases during the monitoring interval, calculating a temperature gap between the highest temperature value in this set of values and the lowest temperature value in this set of values, and comparing this temperature gap with a first predetermined temperature gap threshold,
d. if, in at least two separate monitoring intervals, the minimum speed value is below said first predetermined speed threshold and the temperature gap is above said predetermined temperature gap threshold, triggering an alert signal.

In particular, obtaining a set of values of a rotation speed of a shaft of the engine and obtaining a set of values of the temperature of exhaust gases of the engine may comprise retrieving values from a memory.

In the present invention, values may be retrieved from any memory to which the computer has access.

In particular when the method is implemented during the operation of the engine and the extended interval extends before the monitoring interval, values stored in a memory must be retrieved. When the extended interval extends after the monitoring interval, values may be collected directly from measurement and used for processing and/or saved in a memory.

Furthermore, in some embodiments, each time the minimum speed value is below said predetermined speed threshold and the temperature gap is above said predetermined temperature gap threshold, a counter is incremented if its value is below 2, and when the value of the counter reaches 2 the alert signal is triggered and the counter is reset to zero.

The counter may be reset to zero each time there is an extended interval not meeting the two conditions, such that an alert is triggered only when the two conditions are met in two consecutive extended intervals.

To do so, each time the minimum speed value is above said predetermined speed threshold or the temperature gap is below said predetermined temperature gap threshold during the whole monitoring interval, the counter is reset to zero.

The invention also extends to a computer program comprising instructions for implementing a method of the invention when said program is run on a computer.

The invention also extends to other possible combinations of features described in the above description and in the following description relative to the figures. In particular, the invention extends to methods comprising features described in relation to the computer-implement methods and/or the computer program; the invention extends to computer program comprising features described in relation to the methods and/or the computer-implement methods; the invention extends to computer-implement methods comprising features described in relation to the methods and/or the computer program.

Some specific exemplary embodiments and aspects of the invention are described in the following description in reference to the accompanying figures.

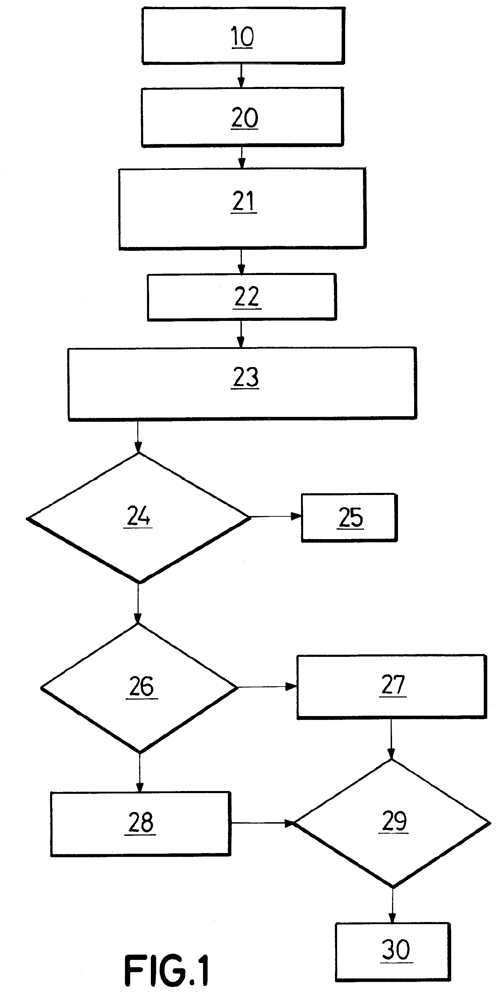

Figure 1 is a schematic representation of a method embodiment according to the invention.

In Figure 1, logical steps of a method according to the invention are depicted.

The temperature of exhaust gases of a combustion turbine engine are continuously measured in a step 10, to obtain exhaust gases temperature values. The temperature values may be obtained by measuring temperature at one location, or it may be obtained by calculating an average of various temperature values obtained at different locations of the engine and/or engine exhaust. These temperature values are stored in a memory during the operation of the engine and are retrieved from this memory to perform the following steps of a method according to the invention.

The rotation speed of a shaft of the engine is also measured continuously and its values stored in a memory. The shaft is the main shaft of the engine. In particular the shaft is the low-pressure shaft (or low-pressure spool shaft) of the engine. The values of the shaft rotation speed are stored in a memory during the operation of the engine and are retrieved from this memory to perform the following steps of a method according to the invention.

In a first step 20, a temperature variation indicator is calculated based on the temperature values of exhaust gases. In particular, the calculation may be a simple difference between two successive temperature values. The calculation is beneficially made for two successive temperature values measured. The temperature variation indicator may be compared to a derivative value of the temperature of exhaust gases given that the temperature measurement frequency is usually high.

In a second step 21, the temperature values measured are compared to a predetermined exhaust temperature threshold. For example, in an aircraft APU, the temperature values may be compared with a threshold of more than 400 degrees Celsius.

In this second step 21, the temperature variation indicator calculated with the temperature value compared in this same step 21, is also compared to a first predetermined temperature variation threshold and a second predetermined temperature variation threshold to determine whether it is between these two threshold values. This allows to filter out any monitoring intervals in which the temperature variation indicator is very low or very high, representing a measurement error.

Further steps of a method according to the invention are only implemented if, at at least one instant, both the first criteria (at least one temperature value is above a predetermined threshold) and the second criteria (the derivative value of the temperature is within a predetermined range) are met.

As soon as a pair of value for temperature and temperature variation indicator of a same instant meet respectively the first criteria and the second criteria, step 22 is implemented.

In step 22, a monitoring interval is defined. In this embodiment the monitoring interval is an extended interval comprises a time interval situated right before the first instant of this monitoring interval at which the first criteria and the second criteria are met, as well as a time interval situated right after the last consecutive instant for which the criteria and the second criteria are met. It may be, in some cases that there only exist one instant at which a pair of temperature and temperature variation indicator meet respectively the first criteria and the second criteria such that the monitoring interval will be very short. In other cases, such conditions will be met for multiple consecutive instants (or measure points) thereby defining the duration of the monitoring interval and by extension of the extended interval.

The extended interval may comprise some seconds before the monitoring interval and some second after the monitoring interval.

The program for implementing a method of the invention comprises a defined precursor variable. This precursor variable may take two values, such as for example 'true' or 'false' values.

In step 23, the temperatures measured during the extended interval are processed to calculate a temperature gap between the highest temperature value in this set of temperature values and the lowest temperature value in this set of temperature values. Previously to calculating this temperature gap, a filter may have been applied to the temperature values in order to exclude very extreme temperature values that could only result as errors of the temperature measurement.

Also in step 23, the rotation speed values of a shaft of the engine measured during the extended interval are processed to determine the minimum value in this set of rotation speed values.

In following step 24, the minimum speed value is compared to a first predetermined speed threshold and to a second predetermined speed threshold in order to determine whether this minimum speed is within the range of values determined by the first and second predetermined speed thresholds.

Also in step 24, the temperature gap is compared with a first predetermined temperature gap threshold.

If in step 24:
- either the minimum speed value is not between the first and second predetermined speed thresholds, or
- the temperature gap is below the temperature gap threshold,
then the method proceeds to step 25.

In step 25 an event counter is set to zero. The precursor variable is also set to 'False'.

If, on the contrary, in step 24:
- the minimum speed value is between the first and second predetermined speed thresholds, and
- the temperature gap is above the temperature gap threshold,
then the method proceeds to step 26.

In step 26, a stored precursor value of the previous extended interval is retrieved. The stored value is representative of the previous occurrence (for example 'True') (or non-occurrence - for example `False') of the double conditions observed in step 24 in the immediately previous extended interval. More particularly in a specific embodiment of the invention, the stored precursor value of the immediately previous extended interval is retrieved.

If in step 26, the stored precursor value is representative of the non-occurrence of the conditions of step 24 triggering step 26 in the previous extended interval (in this embodiment the precursor has the value `False'), then step 27 is implemented.

In step 27, the precursor value of the current extended interval being analyzed is set to be representative of the occurrence of the conditions of step 24 triggering step 26 in this extended interval; for example, it may be set to 'True'.

Also in step 27, the event counter is set to 1.

If, in step 26, the stored precursor value is representative of the occurrence of the conditions of step 24 triggering step 26 in the previous extended interval (for example 'True'), then step 28 is implemented.

In step 28, the event counter is set to a value above a predetermined threshold, for example the event counter may set to the value 2.

After step 27 or step 28, step 29 is implemented. In step 29, the value of the event counter is compared with an event threshold. The event threshold value may be 2 for example. If the event counter is equal or above the event threshold value, then step 30 is implemented.

Step 30 corresponds to the triggering of an alert signal. The alert signal may be a signal to a computer, for example an engine controller. The alert signal may also be a message to a human, such as a written message or a pilot light to a pilot, to a maintenance team or to a maintenance software for example. The alert signal may be representative of a degradation of the combustion conditions in the turbine engine. The alert signal and the moment at which it happened may be stored such that a history of the alert signal may be established for further analysis of its number and frequency of occurrence during an engine operation or even during multiple operation durations of the engine.

The invention is not limited to the specific embodiments herein disclosed as examples. The invention also encompasses other embodiments not herein explicitly described, which may comprise various combinations of the features herein described.

## Claims

1. Method for identifying surge events in a turbine engine comprising:
a. obtaining temperature values of exhaust gases of the engine at multiple instants during the operation of the engine,
b. obtaining values of a temperature variation indicator based on the exhaust gases' temperature values,
c. if, at a given instant, a first criteria and a second criteria are met, the first criteria consisting of at least one temperature value being above a predetermined exhaust temperature threshold, and a second criteria consisting of at least one value of the temperature variation indicator being above a first predetermined temperature variation threshold, then:
i. defining a monitoring interval extending:
• from the first instant of the first criteria and the second criteria being met,
• for as long as the first criteria and the second criteria are consecutively met,
ii. obtaining a set of values of a rotation speed of a shaft of the engine during the monitoring interval, determining the minimum value in this set of values, and comparing this minimum speed value to a first predetermined speed threshold,
iii. obtaining a set of values of the temperature of exhaust gases during the monitoring interval, calculating a temperature gap between the highest temperature value in this set of values and the lowest temperature value in this set of values, and comparing this temperature gap with a first predetermined temperature gap threshold,
d. if, in at least two separate monitoring intervals, the minimum speed value is below said first predetermined speed threshold and the temperature gap is above said predetermined temperature gap threshold, triggering an alert signal.

2. Method according to claim 1, further **characterized in** triggering an alert signal only if the minimum speed value is below said first predetermined speed threshold and the temperature gap is above said predetermined temperature gap threshold, in two consecutive extended intervals.

3. Method according to any of claim 1 or 2, further **characterized in that** step c) is implemented only if the temperature variation indicator is also below a second predetermined temperature variation threshold.

4. Method according to any of claim 1 to 3, further **characterized in that** in step c), the monitoring interval is extended to also comprise a time interval situated right before the first instant of this monitoring interval at which the first criteria and the second criteria are met.

5. Method according to any of claim 1 to 4, further **characterized in that** in step c), the monitoring interval is extended to also comprise a time interval situated right after the last consecutive occurrence of the first criteria and the second criteria being met in this monitoring interval.

6. Method according to any of claim 4 or 5, further **characterized in that** the monitoring interval is extended by between 2 and 30 seconds, for example by 10 seconds.

7. Method according to any of claim 1 to 6, further **characterized in that** in step d), the alert signal is triggered only if the minimum speed value is also above a second predetermined speed threshold.

8. A computer-implemented method for identifying surge events in a turbine engine comprising:
a. obtaining temperature values of exhaust gases of the engine at multiple instants during the operation of the engine,
b. obtaining values of a temperature variation indicator based on the exhaust gases' temperature values,
c. if, at a given instant, a first criteria and a second criteria are met, the first criteria consisting of at least one temperature value being above a predetermined exhaust temperature threshold, and a second criteria consisting of at least one value of the temperature variation indicator being above a first predetermined temperature variation threshold, then:
i. defining a monitoring interval extending:
• from the first instant of the first criteria and the second criteria being met,
• for as long as the first criteria and the second criteria are consecutively met,
ii. obtaining a set of values of a rotation speed of a shaft of the engine during the monitoring interval, determining the minimum value in this set of values, and comparing this minimum speed value to a first predetermined speed threshold,
iii. obtaining a set of values of the temperature of exhaust gases during the monitoring interval, calculating a temperature gap between the highest temperature value in this set of values and the lowest temperature value in this set of values, and comparing this temperature gap with a first predetermined temperature gap threshold,
d. if, in at least two separate monitoring intervals, the minimum speed value is below said first predetermined speed threshold and the temperature gap is above said predetermined temperature gap threshold, triggering an alert signal.

9. A computer-implemented method according to claim 8, further **characterized in that** obtaining a set of values of a rotation speed of a shaft of the engine and obtaining a set of values of the temperature of exhaust gases of the engine comprises retrieving values from a memory.

10. A computer-implemented method according to any of claims 8 or 9, further **characterized in that** each time the minimum speed value is below said predetermined speed threshold and the temperature gap is above said predetermined temperature gap threshold, a counter is incremented if its value is below 2, and when the value of the counter reaches 2 the alert signal is triggered and the counter is reset to zero.

11. A computer-implemented method according to claim 10, further **characterized in that** each time the minimum speed value is above said predetermined speed threshold or the temperature gap is below said predetermined temperature gap threshold during the whole monitoring interval, the counter is reset to zero.

12. A computer program comprising instructions for implementing a method of any of claims 1 to 11 when said program is run on a computer.
